# EUROPEAN PATENT APPLICATION

(11) **EP 1 542 247 A2**
(43) Date of publication of application: **15.06.2005**
(21) Application number: 04102142.9
(22) Date of filing: 14.05.2004
(51) Int. Cl.: H01F 38/14, H02J 5/00

(54) **Non-contact means for energising a moving electrical load**

(30) Priority: 10.12.2003 KR 2003089456
(71) Applicant: Samsung Electronics Co., Ltd., Suwon-si, Gyeonggi-Do 442-742 (KR)
(72) Inventor: Youm, Jang-hyoun, Paldal-gu, Suwon-si, Gyeongi-do (KR); Jang, Sang-don, Paldal-gu, Suwon-si, Gyeonggi-do (KR)
(74) Representative: Read, Matthew Charles

(57) **Abstract**

A non-contact feeder system includes a plurality of conductors 11-14 arranged approximately parallel to a direction of movement of an electrical load 60 and one or more AC power supplies 21, 22 for supplying AC currents to the conductors. A current is induced in pick-ups 31-34, which are connected to and move with the electrical load 60, due to magnetic fields generated by current flowing through the conductors 11-14. A controller 40 controls the power supplies 21, 22 so that currents flowing through adjacent conductors 11 and 12, 11 and 13, have the same phase but flow opposite directions, i.e. the currents are in anti-phase. Therefore, the resulting magnetic fields constructively interfere with one another. The physical size of the non-contact feeder system is reduced, compared with prior art systems, and the efficiency with which current is induced at the pick-ups 31-34 is improved.

## Description

The present invention relates to a non-contact feeder system for energising an electrical load by induction, comprising a plurality of conductors, including a first conductor, a second conductor and a third conductor, wherein a first magnetic field is generated when a first current flows through said first conductor, a second magnetic field, which is generated when a second current flows through said second conductor, and a third magnetic field is generated when a third current flows through said third conductor and power supply means arranged to cause said first, second and third currents to flow. The present invention also relates to an electrical load configured to be energised by such a feeder system.

To carry products or to determine positions of the products on a production line or in a distribution system, a moving system having a moving component, such as a carrier, is used. In many known systems, a power cable is connected to the moving component for use in supplying electrical power to the moving component and operating it. However, this arrangement is noisy and results in dust being kicked up, because the power cable is dragged together with the moving component. Furthermore, the power cable may be damaged or cut as it is repeatedly bent while being dragged.

To solve the above problem, non-contact feeder systems have been developed, which supply electrical power to a moving component without requiring physical contact between a power cable and the moving component. Instead, a feeding cable, through which an AC current flows, extends along a direction of movement of the moving component. A magnetic field is generated due to the flow of AC current through the feeding cable, which can be used to produce an induced current within the moving component.

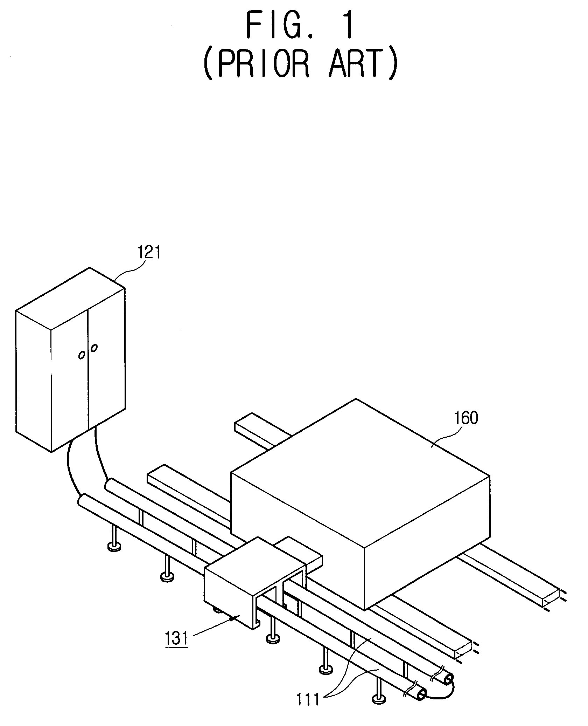

As shown in Figure 1, a conventional non-contact feeder system comprises an AC power supply 121, a parallel cable 111 arranged along a direction of movement of a moving component 160, where the moving component 160 moves back and forth with respect to the parallel cable 111, and a pick-up 131 arranged to move with the moving object 160 and to provide an induced current from a magnetic field arising from an AC current flowing through the parallel cable 111.

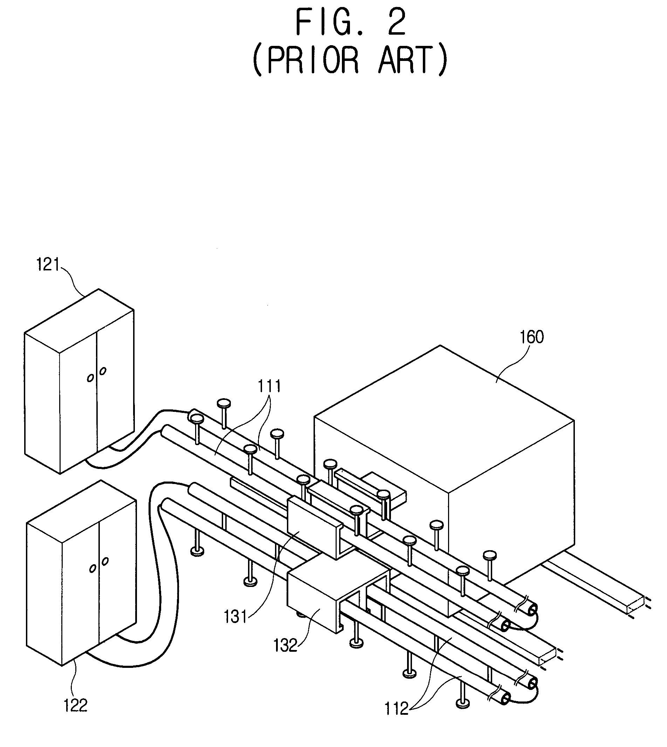

In order to accommodate moving components 160 with increased power requirements, a non-contact power supply system may include two AC power supplies 121, 122, with two corresponding parallel cables 111, 112 and pick-ups 131, 132, as shown in Figure 2.

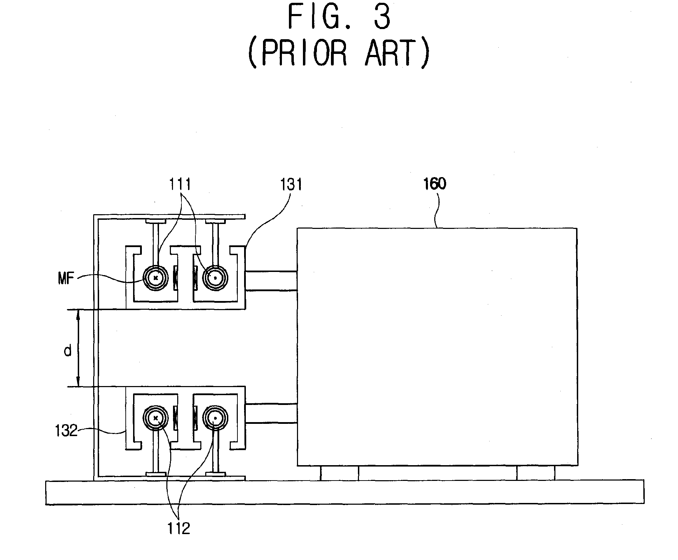

However, in a conventional non-contact feeder system, if AC currents are supplied to the two parallel cables 111, 112 by the two AC power supplies 121, 122, the pick-ups 131 and 132 should be separated from each other by a predetermined interval "d", as shown in Figure 3. This separation is required because the AC power supplies 121, 122 are controlled separately, so that the phase and direction of the AC currents supplied from the AC power supplies 121, 122 are determined independently. Thus, the direction of a magnetic field formed around one of the parallel cables 111 is does not depend on the magnetic field formed around the other parallel cable 112 and vice versa. If the AC currents have the directions shown in Figure 3, the magnetic fields formed around the parallel cables 111 and 112 destructively interfere with each other, decreasing the efficiency of the induction performed by the pick-ups 131, 132.

If more than two parallel cables 111, 112 are arranged to supply AC currents from more than two AC power supplies 121, 122 to the moving component 160, the parallel cables 111, 112 etc. should be spaced apart from each other at predetermined intervals "d", in order to avoid decreasing the efficiency of the induction. This places a restriction on the minimum physical size of the non-contact feeder system and, therefore, the size of a space required for its mounting.

According to the invention, a non-contact feeder system is characterised in that the first conductor is disposed sufficiently closely to the second and third conductors so as to permit significant interaction between the first and second magnetic fields and between the first and third magnetic fields and the first current is in anti-phase relative to the second and third currents.

In such a system, destructive interference between the magnetic fields generated by the AC currents flowing within adjacent cables is avoided. The magnetic fields may constructively interfere, thereby increasing the efficiency with which current is induced in the pick-up means. This also allows the separation between the components of the pick-up means to be reduced, when compared with prior art arrangements. This may potentially result in a non-contact feeder system with a reduced physical size and, therefore, decreasing space requirements if it is mounted.

The power supply means may comprise first and second AC power supplies, wherein each AC power supply corresponds to two of said cables and forms a closed loop therewith, and a controller for controlling a phase and a direction of AC current supplied to the cables by said AC power supplies. Alternatively, the non-contact feeder system may comprise a single power supply, with a single closed loop. The closed loop or loops may comprise more than one turn, if required.

The invention also provides an electrical load configured to be energised by the feeder system, comprising pick-up means having first, second and third pick-up cores associated with the first, second and conductors respectively and at least one coil, wherein the first pick-up core is in physical contact with the second and third pick-up cores.

If used with the feeder system comprises multiple AC power supplies, the at least one coil may be wound around two of said pick-up cores, the two pick-up cores being associated with conductors in different closed loops.

Embodiments of the invention will now be described by way of example and with reference to the accompanying drawings of which:
Figure 1 shows a conventional non-contact feeder system having an AC power supply;
Figure 2 shows a conventional non-contact feeder system having two AC power supplies;
Figure 3 is a cross-sectional view showing pickup parts and round cables of the non-contact feeder system shown in Figure 2;
Figure 4 shows a non-contact feeder system according to a first embodiment of the present invention;
Figure 5 is a partial sectional view of the non-contact feeder system of Figure 4, showing pickup parts and cables;
Figure 6 shows configurations of the AC power supplies and a controller of the non-contact feeder system of Figure 4;
Figure 7 shows waveforms of AC currents output by the AC power supplies of the non-contact feeder system of Figure 4;
Figure 8 shows a non-contact feeder system according to a second embodiment of the present invention; and
Figures 9A and 9B show example arrangements for mounting a plurality of feeding cables and a plurality of pick-ups in a non-contact feeder system, according to further embodiments of the present invention.

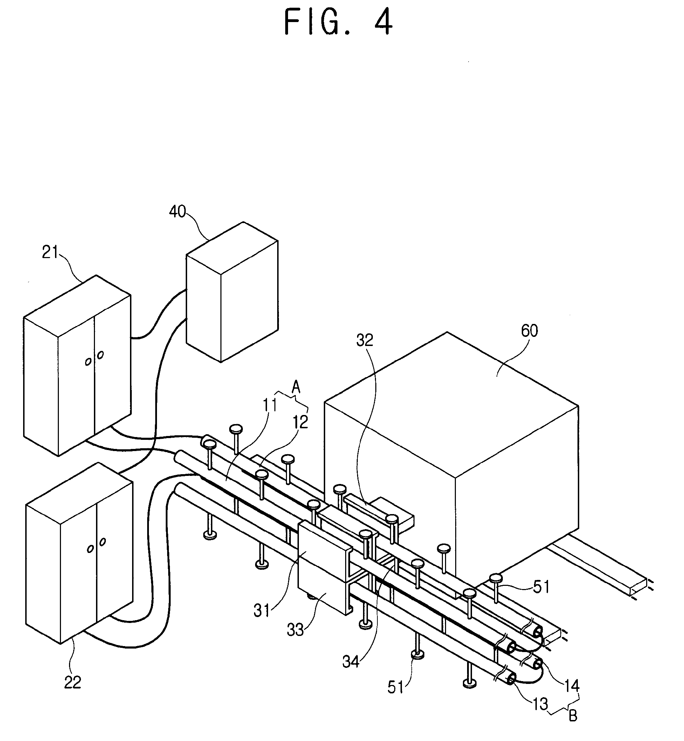

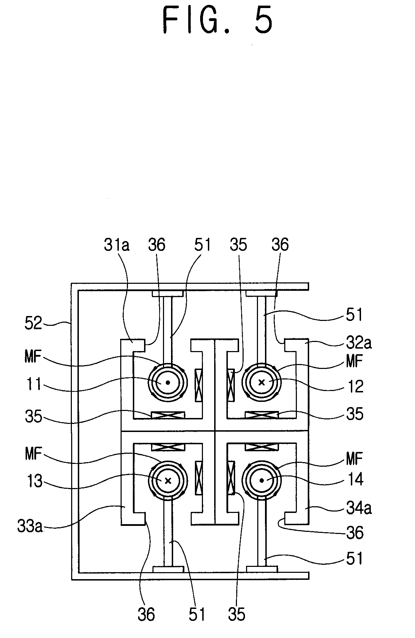

As shown in Figures 4 and 5, a non-contact feeder system according to a first embodiment of the invention is arranged to supply an induced current to an electrical load 60, such as a carrier. In this particular embodiment, the non-contact feeder system comprises a plurality of AC power supplies 21, 22, feeding cables 11, 12, 13, 14, and pick-ups 31, 32, 33, 34, together with a controller 40.

The feeding cables 11, 12, 13, 14 are hereafter referred to as a first feeding cable 11, a second feeding cable 12, a third feeding cable 13 and a fourth feeding cable 14 respectively. The pick-ups 31, 32, 33, 34 corresponding to the first to fourth feeding cables 11, 12, 13 and 14 are referred to as a first pick-up 31, a second pick-up 32, a third pick-up 33 and a fourth pick-up 34 respectively. Similarly, pick-up cores 31a, 32a, 33a, 34a provided in the first to fourth pick-ups 31, 32, 33 34 respectively are referred to as a first pick-up core 31a, a second pick-up core 32a, a third pick-up core 33a and a fourth pick-up core 34a.

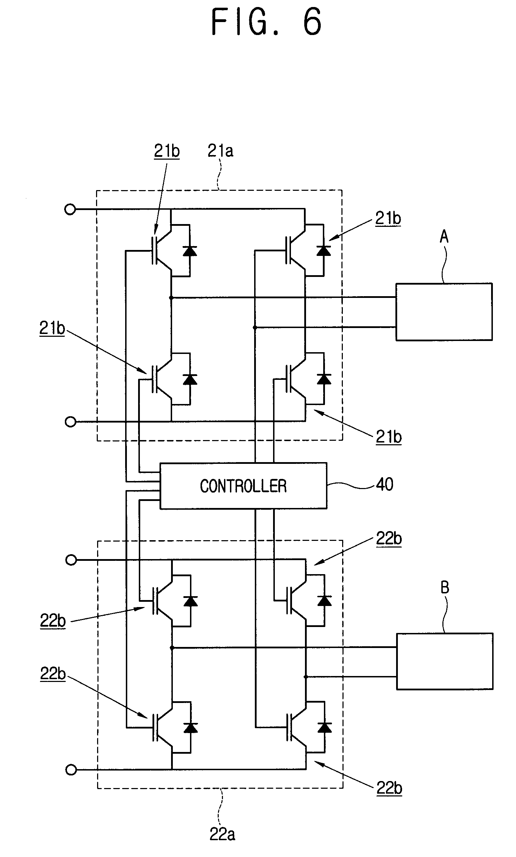

Each of the AC power supplies 21, 22 converts a standard AC current supplied from an external source into an AC current with a high frequency. The AC power supplies 21, 22 supply the high frequency AC currents with a high frequency to corresponding ones of the feeding cables 11, 12, 13, 14. Referring to Figure 6, each AC power supply 21, 22 may comprise a rectifying unit, not shown, for rectifying and smoothing the standard AC current, and inverters 21a and 22a for converting the rectified and smoothed direct current into an AC current and supplying the high frequency AC current to the feeding cables 11, 12, 13 and 14. In this example, the inverters 21a, 22a are provided by bridge circuits, each of which comprises a plurality of switching elements 21b and 22b. The switching elements 21b and 22b are turned on and off in accordance with control signals generated by the controller 40.

Each of the AC power supplies 21, 22 forms a closed loop with its associated feeding cables 11, 12 or 13, 14. In other words, one of the AC power supplies 21, the first feeding cable 11 and the second feeding cable 12 form a closed loop, while the other AC power supply 22, the third feeding cable 13 and the fourth feeding cable 14 form another closed loop.

Hereafter, the one AC power supply 21 is referred to as the first AC power supply and the other AC power supply 22 is referred to as the second AC power supply. Similarly, the inverter 21a of the first AC power supply 21 is referred to as the first inverter 21a while the inverter 22a of the second AC power supply 22 is referred to as the second inverter 21 a.

The feeding cables 11, 12, 13, 14 are arranged so that they extend in a direction that is substantially parallel to a direction of movement of the electrical load 60. Referring to Figure 4, the first feeding cable 11 and the second feeding cable 12 a parallel "loop" of cable A, hereafter referred to as the first parallel cable A, and the third feeding cable 13 and the fourth feeding cable 14 form another parallel loop of cable B, hereafter referred to as the second parallel cable B. The first parallel cable A is positioned so that it extends in a direction that is transverse to the pick-ups 31, 32 and the second parallel cable B is positioned in a traverse direction to the pick-ups 33, 34 directly below the first parallel cable A.

The controller 40 controls the phase and direction of the AC current supplied from the first AC power supply 21 and/or the second AC power supply 22 so that the AC currents passing through feeding cables 11, 12, 13, 14 that are positioned adjacent to one another match each another in terms of phase but have opposite directions. For instance, the first feeding cable 11 and the second feeding cable 12 form the first parallel round cable A. The phases of the AC currents of the first and second feeding cables 11, 12 are the same, but the directions of these AC currents are opposite to one another. In other words, the phases of the AC currents of the first and second feeding cables 11, 12 are in anti-phase. Similarly, the AC currents of the third feeding cable 13 and the fourth feeding cable 14 have the same phase but have opposite directions

Each of the feeding cables 11, 12, 13, 14 is supported by a cable fixer. In this particular embodiment, the cable fixer comprises a supporter 52 and a cable supporting bar 51. The cable supporting bar 51 has a first end which is connected to the feeding cables 11, 12, 13, 14 and a second end that is connected to the supporter 52.

The cable supporting bar 51 prevents the feeding cables 11, 12, 13, 14 from drooping under their own weight. As in this example, a plurality of cable supporting bars 51 may be provided at predetermined intervals along the feeding cables 11, 12, 13,14.

The supporter 52 may be provided as a separate structure, although an external structure having a suitable surface, such as a bottom surface, a wall, or a ceiling, may be used as the supporter 52 if the suitable surface on which the non-contact feeder system is to be positioned is disposed adjacent to the cable supporting bar 51.

Each of the pick-ups 31, 32, 33, 34 induces an induced current due to a magnetic field generated by the AC current of a corresponding one of the feeding cables 11, 12, 13, 14, and supplies the induced current to the electrical load 60. The pick-ups 31, 32, 33 and 34 move with the electrical load 60 without making any physical contact with their respective feeding cable 11, 12, 13, 14.

In this embodiment, each pick-up 31, 32, 33, 34 comprises the pick-up core 31 a, 32a, 33a, 34a, which is arranged to cover a corresponding one of the feeding cables 11, 12, 13, 14 without being in physical contact therewith, and a pick-up coil 35 that is wound around the pick-up core 31 a, 32a, 33a, 34a.

Each pick-up core 31a, 32a, 33a, 34a has a substantially tubular shape and may be of a rectangular section in a direction that is transverse to the direction of movement of the electrical load 60. The pick-up cores 31a, 32a, 33a, 34a are positioned adjacent to one another in a closely contacting manner, so that the plurality of pick-up cores 31a, 32a, 33a and 34a have a cross-section with a matrix-like structure in said direction. As shown in Figure 5, the pick-up cores 31a, 32a, 33a and 34a may be positioned so that they are in contact with one another, thereby decreasing the physical size of the non-contact feeder system and, therefore, the space required for mounting.

The directions of the currents flowing through the feeding cables 11, 12, 13, 14 that are adjacent to one another are opposite to one another. For example, as described above, the AC current of the first feeding cable 11 passing through the first pick-up core 31a has the same phase as the AC currents of the second and third feeding cables 12, 13, which pass through the second and third pick-up cores 32a, 33a, respectively, where the second and third pick-up cores 32a, 33a are adjacent to the first pick-up core 31a. However, the direction of the AC current of the first feeding cable 11 is opposite to the directions of the AC currents of the second and third feeding cables 12, 13.

An opening 36 is provided in each pick-up core 31 a, 32a, 33a, 34a along the direction of the feeding cables 11, 12, 13, 14, i.e., the moving direction of the electrical load 60. This allows the pick-up cores 31a, 32a, 33a, 34a to move along the direction of the corresponding feeding cables 11, 12, 13, 14 without being caught by the cable supporting bar 51.

A pick-up coil 35 is wound around the inside and the outside of each of the pick-up cores 31a, 32a, 33a and 34a. The pick-up coil 35 transmits each of the currents induced in the pick-up cores 31a, 32a, 33a, 34a to a rectifying unit, not shown. The rectifying unit outputs a rectified current which is supplied to a constant voltage controller, not shown. The constant voltage controller supplies the electrical power to the electrical load 60 according to its requirements.

Pick-up coils 35 are wound around each pair of pick-up cores 31a, 32a, 33a, 34a that are disposed adjacent to one another. In this example, the adjacent pick-up cores 31a, 32a, 33a, 34a closely contact one another. As shown in Figure 5, a pick-up coil 35 is wound around the first pick-up core 31a and the second pick-up coil 32a, and another pick-up coil 35 is wound around the first pick-up core 31a and the third pick-up coil 33a. As, the pick-up cores 31a, 32a, 33a, 34a can be in physical contact with one another, the space required to mount the pick-ups 31, 32, 33 and 34 is decreased.

The controller 40 controls the phase and direction of the AC currents output by the AC power supplies 21, 22, so that the magnetic fields formed around the corresponding the feeding cables 11, 12, 13, 14 constructively interfere with one another. If the direction of the current within each feeding cable 11, 12, 13, 14 is as shown in Figure 5, the magnetic fields that form around the feeding cables 11, 12, 13, 14 do not destructively interfere with one another.

The controller 40 controls switching of each of the switching elements 21b, 22b of the inverters 21a and 22a of the AC power supplies 21, 22 in order to control the direction and the phase of the AC current supplied by each of the AC power supplies 21, 22. For example, the controller 40 turns the switching element 21b and 22b of the first inverter 21a and the second inverter 22a on and off, using a scheme in which the same timing and period is used for both inverters 21 a, 22b. This results in the phase of the AC current from the first AC power supply 21 and the phase of the AC current from the second AC power supply 22 being the same.

The controller 40 also determines which one of the switching elements 21b and 22b is turned on or off, so that the directions of the AC currents in the first and third feeding cables 11, 13 which are adjacent to each other, are opposite to one another, and the directions of the AC currents in the second and fourth feeding cables 12, 14, which are also adjacent to each other, are also opposite to one another. As the AC currents flowing through adjacent feeding cables 11, 12, 13, 14 have opposite directions with respect to each other and the same phases, the magnetic fields formed around the feeding cables 11, 12, 13, 14 constructively interfere with each other. This constructive interference increases the efficiency with which current is induced by the pick-ups 31, 32, 33, 34 when compared with the prior non-contact feeder systems described above.

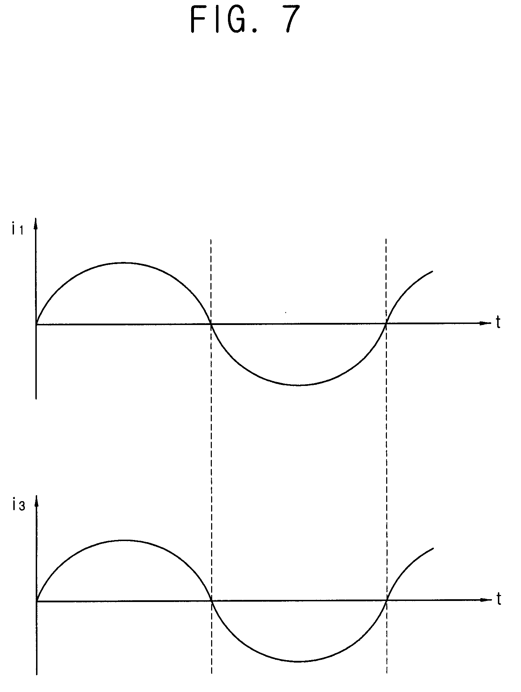

Figure 7 shows the waveforms of AC currents i1, i3, which are supplied by the AC power supplies 21, 22 to the first and third feeding cable 11, 13 respectively.

In this particular embodiment, the AC power supplies 21, 22 are installed in an apparatus so that they are physically separated from each other. However, in an alternative arrangement, the AC power supplies 21, 22 may be installed together in an apparatus, if they are arranged so that AC currents having two different waveforms are supplied to the feeding cables 11, 12, 13, 14.

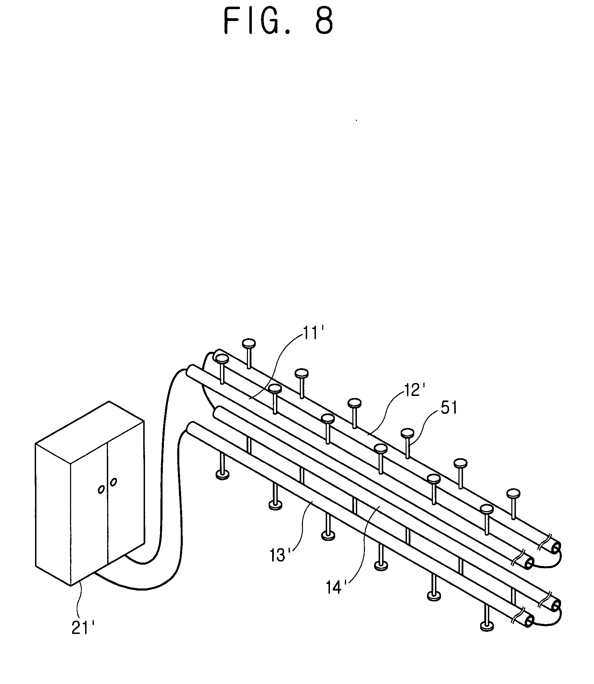

Referring to Figure 8, a non-contact feeder system according to a second embodiment of the present invention comprises feeding cables 11', 12', 13', 14' which are connected in series and disposed parallel to a direction of movement of an electrical load, not shown. The feeding cables 11', 12', 13', 14', in combination with a signal AC power supply 21', form a closed loop. An AC current is supplied by the AC power supply 21', so that directions of the AC currents flowing through the feeding cables 11', 12', 13', 14' are opposite to one another, while having the same phase. Thus, the magnetic fields formed around the corresponding ones of the feeding cables 11', 12', 13', 14' can constructively interfere with one another if an arrangement of the feeding cables 11', 12', 13', 14' are varied. Unlike embodiments with multiple AC power supplies, such as that shown in Figure 4, a controller for controlling the supply of AC current to the feeding cables 11', 12', 13', 14' is not required.

Apart from the omission of a controller, each of components used for the non-contact feeder system shown in Figure 4 can be used for the non-contact feeder system according to this embodiment of the present invention. For this reason, a detailed description of the components is omitted.

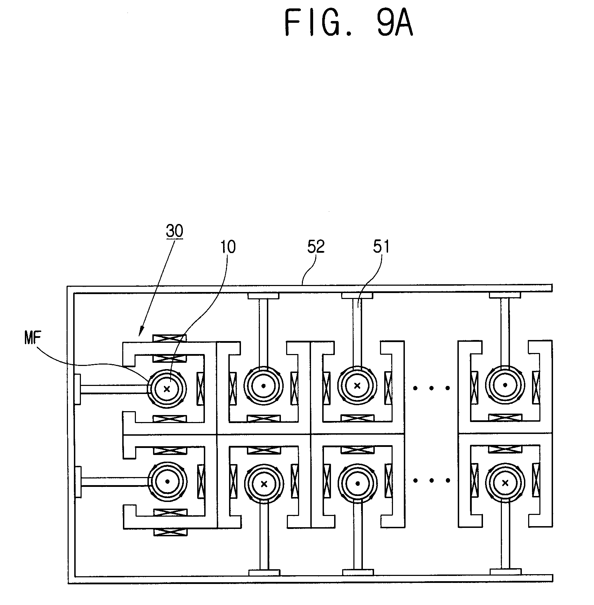

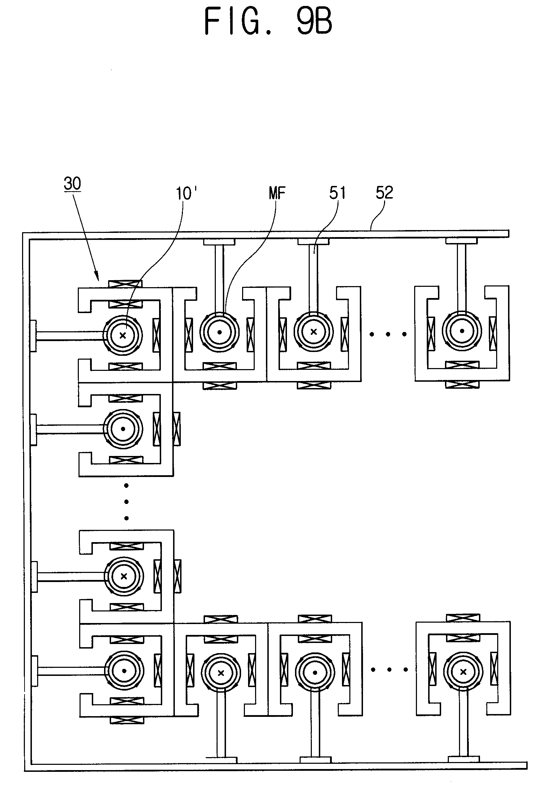

Figures 9A and 9B show cross-sectional views of parts of non-contact feeder systems according to further embodiments of the invention. Each non-contact feeder system has a plurality of feeding cables 10 and 10' and pick-ups 30 and 30'. If magnetic fields MF formed around the feeding cables 10 and 10' that are adjacent to one another constructively interfere, it is not necessary to maintain a given physical separation between the feeding cables 10, 10' and pick-ups 30, 30', such as the interval "d" shown in prior art Figure 3. In particular, the pick-ups 30, 30' may be positioned adjacent to one another.

As described above, the present invention provides a non-contact feeder system in which the space to mount the non-contact feeder system is decreased and the induced current is generated with greater efficiency when compared with prior art systems.

## Claims

1. A feeder system for energising an electrical load (60) by induction, comprising:
a plurality of conductors (11, 12, 13, 14), including a first conductor (11), a second conductor (12) and a third conductor (13), wherein a first magnetic field is generated when a first current flows through said first conductor, a second magnetic field, which is generated when a second current flows through said second conductor, and a third magnetic field is generated when a third current flows through said third conductor; and
power supply means (21, 22) arranged to cause said first, second and third currents to flow;
**characterised in that**:
the first conductor is disposed sufficiently closely to the second and third conductors so as to permit significant interaction between the first and second magnetic fields and between the first and third magnetic fields; and
the first current is in anti-phase relative to the second and third currents.

2. A feeder system according to claim 1, wherein said power supply means comprises first and second AC power supplies (21, 22), wherein each AC power supply is associated with two of said conductors (11, 12, 13, 14), forming a closed loop therewith, and comprising a controller (40) for controlling a phase and a direction of AC current supplied to the conductors (11, 12, 13, 14) by said AC power supplies.

3. A feeder system according to claim 1, wherein said power supply means comprises only one power supply (21) and said conductors (11, 12, 13, 14) are arranged as a loop comprising two or more turns.

4. An electrical load (60) configured to be energised by a feeder system according to claim 1, 2, or 3, comprising:
pick-up means (31, 32, 33) comprising first, second and third pick-up cores (31a, 32a, 33a), associated with the first, second and conductors (11, 12, 13) respectively, and at least one coil (35);
wherein the first pick-up core (31 a) is in physical contact with the second and third pick-up cores (32a, 33a).

5. An electrical load according to claim 4, configured to be energised by a feeder system according to claim 2, wherein said at least one coil (35) is wound around two of said pick-up cores (31a, 33a), said two pick-up cores being associated with conductors (11, 13) in different closed loops.

6. A non-contact feeder system to supply an induced current to an electrical load comprising:
at least three feeding cables arranged substantially parallel to one another along a moving direction of the electrical load;
a plurality of AC power supplies to supply AC currents to the feeding cables; pick-up parts to supply an induced current induced from a magnetic field formed by a corresponding one of the AC currents flowing through corresponding ones of the feeding cables to the electrical load and to be movable along the corresponding one of the feeding cables without contacting the feeding cables as the electrical load moves; and
a controller to control the plurality of the AC power supplies, so that phases of the AC currents supplied from each of the AC power supplies are the same, and directions of the AC currents flowing through the feeding cables positioned adjacent to one another are reverse with respect to one another.

7. The non-contact feeder system according to claim 6, wherein each of the AC power supplies comprises an inverter having a plurality of switch elements to supply the AC currents to corresponding ones of the feeding cables, and the controller controls the switching elements of each inverter to control the phase and the direction of the AC current outputted from each of the AC power supplies.

8. The non-contact feeder system according to claim 7, wherein the feeding cables comprise a pair of feeding cables connected at one end in series to form a parallel round cable, and connected at opposite end to one of the AC power supplies in series.

9. The non-contact feeder system according to claim 8, wherein the pick-up parts each comprises:
a pick-up core of a substantially tubular shape that winds around a corresponding one of the feeding cables without contacting the feeding cables and is arranged adjacent to another pick-up core of the other pick-up parts; and
a pick-up coil wound around the pick-up core to supply the induced current induced from the magnetic field formed by the corresponding one of the feeding cables to the electrical load.

10. The non-contact feeder system according to claim 9, wherein the pick-up cores are of a substantially rectangular section in a transverse direction of a moving direction of the electrical load, and are arranged adjacent to one another and contact each other.

11. The non-contact feeder system according to claim 10, wherein directions of the AC currents of the feeding cables adjacent to one another are reverse with respect to one another.

12. The non-contact feeder system according to claim 10, wherein the pair of the feeding cables forming the parallel round cable pass through corresponding ones of the pick-up cores disposed adjacent to one another.

13. The non-contact feeder system according to claim 10, wherein the pick-up coil is wound around the pair of the pick-up cores disposed adjacent to one another.

14. The non-contact feeder system according to claim 6, wherein the at least three feeding cables are disposed adjacent to one another and are each connected in series with one other feeding cable, so that the AC currents supplied from each of the AC power supplies have directions reverse with respect to one another.

15. A non-contact feeder system to supply an induced current to an electrical load, comprising:
at least three feeding cables arranged substantially parallel to one another along a moving direction of the electrical load;
a plurality of AC power supplies to supply an AC current to the feeding cables; and
pick-up parts to supply an induced current induced from a magnetic field formed by the AC current flowing through each of the feeding cables to the electrical load and to be movable along each of the feeding cables without contacting each of the feeding cables as the electrical load moves,
wherein pairs of the feeding cables are electrically connected in series and are arranged so that directions of AC currents passing through each of the feeding cables disposed adjacent to one another are reverse with respect to one another.

16. The non-contact feeder system according to claim 15, wherein each of the pick-up parts comprises:
a pick-up core of a tubular shape that winds around a corresponding one of the feeding cables without making contacting therewith and is arranged adjacent to another pick-up core; and
a pick-up coil wound around the pick-up core to supply the induced current induced from the magnetic field formed by the corresponding one of the feeding cables to the electrical load.

17. The non-contact feeder system according to claim 16, wherein the pick-up cores are of a rectangular section in a transverse direction of a moving direction of the electrical load and arranged adjacent to one another by closely contacting one another.

18. The non-contact feeder system according to claim 17, wherein directions of AC currents of the feeding cables passing through the corresponding ones of the pick-up cores disposed adjacent to one another are reverse with respect to one another.

19. The non-contact feeder system according to claim 17, wherein the pick-up coil is wound around a pair of pick-up cores disposed adjacent to each other.

20. A non-contact feeder system to supply an induced current to an electrical load, comprising:
first, second, and third feeding cables disposed in a direction parallel to a moving direction of the electrical load; and
first, second, and third pick-up cores disposed to generate the induced current from the first, second, and third feeding cables, respectively, wherein the first pickup core comprises first and second sides disposed to contact sides of the second and third pick-up cores, respectively.

21. The non-contact feeder system according to claim 20, further comprising:
a first pick-up coil winding around the side of the second pick-up core and the first side of the first pick-up core; and
a second pick-up coil winding around the side of the third pick-up core and the second side of the first pick-up core.

22. The non-contact feeder system according to claim 20, wherein the first and second sides are perpendicular to each other.

23. The non-contact feeder system according to claim 20, wherein the first, second, and third pick-up cores form an integrated body.

24. The non-contact feeder system according to claim 20, wherein the side of the second pick-up core and the first side of the first pick-up core do not have a gap therebetween, and the side of the third pick-up core and the second side of the first pick-up core do not have a gap therebetween.

25. The non-contact feeder system according to claim 20, further comprising:
a fourth feeding cable disposed in a direction parallel to a moving direction of the electrical load; and
a fourth pick-up core disposed to generate the induced current from the fourth feeding cable, wherein the fourth pick-up core comprises third and fourth sides disposed to contact other sides of the second and third pick-up cores, respectively.

26. The non-contact feeder system according to claim 25, further comprising:
a third pick-up coil winding around the other side of the second pick-up core and the third side of the fourth pick-up core; and
a fourth pick-up coil winding around the other side of the third pickup core and the fourth side of the fourth pickup core.

27. The non-contact feeder system according to claim 25, wherein the third and fourth sides of the fourth pick-up core are perpendicular to each other.

28. The non-contact feeder system according to claim 25, wherein the first, second, third, and fourth pick-up cores form an integrated body.

29. The non-contact feeder system according to claim 25, wherein the side of the third pick-up core and the second side of the first pick-up core do not have a gap therebetween, and the other side of the second pick-up core and the third side of the fourth pick-up core do not have a gap therebetween.
